# FASCICULE DE BREVET EUROPEEN

(11) **EP 2 126 432 B1**
(45) Date de publication et mention de la délivrance du brevet: **01.09.2010**
(21) Numéro de dépôt: 08799835.7
(22) Date de dépôt: 26.03.2008
(51) Int. Cl.: F16K 31/11

(54) **ROBINET DE SECURITE POUR FLUIDE**
SICHERHEITSVENTIL FÜR FLÜSSIGKEITEN
SAFETY VALVE FOR FLUID

(30) Priorité: 29.03.2007 FR 0754120
(43) Date de publication de la demande: 02.12.2009
(73) Titulaire: Chuchu Decayeux, 80520 Woincourt (FR)
(72) Inventeur: EMPEREUR, Vincent, F-80130 Friville Escarbotin (FR); CARON, Christophe, F-80132 Quesnoy-le-montant (FR)
(74) Mandataire: de Kernier, Gabriel
(86) Numéro de dépôt international: PCT/FR2008/050523
(87) Numéro de publication internationale: WO 2008/129220

(56) Documents cités:
- DE-A1- 3 120 890
- FR-A- 2 689 955
- FR-A- 2 812 926
- US-A1- 2006 260 689

## Description

L'invention concerne les robinets et plus particulièrement les robinets pour fluides.

Le document FR 2 653 554 (MICHEL ROCHE) décrit un compteur électronique d'eau avec émission et réception d'ultrasons dans l'eau pour effectuer un relevé de consommation à distance.

Le document FR 2 715 222 (GIAT INDUSTRIES) décrit un compteur autoalimenté au moyen d'une hélice entraînant un générateur de mesure.

Le document EP 0 990 877 (BETADUE ITALIE) décrit un appareil pour déterminer la consommation d'eau avec relevé à distance.

Le document US 5 659 300 (INNOVATEC CORPORATION) décrit un débitmètre pour fluide avec transmission de données à distance.

Le document DE 197 23 189 (GUNTHER STEINERT) décrit également un compteur d'eau avec relevé à distance.

Les documents US 2006/0260689 (GEJ,LLC) et FR 2 646 234 (MICHEL RUAS) concernent un procédé de relevage et d'interruption de consommation de fluides comportant un dispositif de pontage, une génératrice de courant électrique entraîné par le déplacement du fluide, une batterie chargée avec le courant ainsi recueillie et un système électronique permettant la transmission de données et la commande d'un clapet. Le clapet peut être commandé par une société de gestion afin de couper la fourniture du fluide au consommateur concerné par envoi à distance d'un ordre à travers ledit système de transmission.

La demanderesse s'est aperçue que les demandes de brevet antérieur ne proposent pas une fiabilité de l'interruption des fluides suffisante pour une utilisation sur des installations sensibles. En l'occurrence, le système d'actionnement décrit dans le document US 2006/0260689 (GEJ,LLC) ou FR 2 646 234 est non seulement coûteux mais également potentiellement sujet à un grippage des différents éléments mobiles ou un disfonctionnement de son solénoïde de commande.

L'invention a pour objet un robinet de sécurité pour fluides dont le mécanisme d'ouverture est actionnable de façon manuelle et à distance.

L'invention a pour objet un robinet de sécurité pour fluides dont le mécanisme d'ouverture est fiable et simple.

Dans un mode de réalisation, un robinet de sécurité pour fluide circulant dans une canalisation pouvant comprendre un orifice d'entrée un orifice de sortie un canal reliant l'orifice d'entrée et l'orifice de sortie, un organe d'obturation disposé entre l'orifice d'entrée et l'orifice de sortie, mobile entre une position d'ouverture du canal et une position de fermeture du canal, pouvant comprendre un actionneur d'armement de l'organe d'obturation capable de faire passer l'organe d'obturation de la position d'ouverture à la position de fermeture, un verrou de maintien de l'organe d'obturation en position d'ouverture, un organe de commande du verrou maintenant le verrou en position de verrouillage sous l'action d'un aimant permanent et muni d'une bobine générant un champ magnétique antagoniste à celui de l'aimant permanant pour déplacer le verrou vers une position inactive provoquant le déplacement de l'organe d'obturation vers la position de fermeture sous l'action de l'actionneur, le verrou étant configuré pour autoriser un déplacement de l'organe d'obturation soumis à un effort supérieur à la force de verrouillage du verrou, le verrou étant capable de reprendre une position de verrouillage dés l'amenée de l'organe d'obturation en position d'ouverture, l'organe d'obturation étant muni d'une partie de commande manuelle.

Dans un mode de réalisation, un robinet de sécurité dans lequel l'actionneur d'armement de l'organe d'obturation est fixé à l'organe d'obturation et à la partie de commande manuelle de l'organe d'obturation, l'actionneur d'armement comprenant une tige liée en rotation par un de ses extrémités à l'organe d'obturation, et une collerette dans laquelle est ménagé un trou radial formant un logement 104 pour le verrou de maintient.

Dans un mode de réalisation, un robinet de sécurité dans lequel l'organe de commande du verrou comprend une première bride, une deuxième bride d'articulation avec le verrou, une surface d'appui avec un ressort exerçant une force sur l'organe de commande du verrou et une partie magnétique capable d'interagir avec l'aimant permanent située également d'un deuxième coté de la bride à une distance plus grande du point d'appui que le ressort afin de former un levier. L'organe de commande du verrou peut posséder deux positions de fonctionnement distinctes, une position de déverrouillage telle que le verrou est sorti du logement de la collerette de l'actionneur d'armement et une position de verrouillage telle que le verrou est positionné dans le logement de la collerette de l'actionneur d'armement.

Dans un mode de réalisation, un robinet de sécurité peut comprendre un moyen de communication pouvant recevoir un signal distant et émettre par au moins une des ses sorties un signal à destination d'un moyen de commande.

Dans un mode de réalisation, un robinet de sécurité peut comprendre un moyen de commande recevant sur au moins un de ses entrées un signal provenant du moyen de communication et capable de commander l'énergie envoyée dans la bobine de neutralisation, afin de placer le verrou en position de verrouillage ou de déverrouillage.

Dans un mode de réalisation, un robinet de sécurité peut comprendre un moyen d'alimentation autonome en énergie capable d'alimenter en énergie le robinet de sécurité.

D'autres buts, caractéristiques et avantages de l'invention apparaîtront à la lecture de la description suivante, donnée uniquement à titre d'exemple non limitatif et faite en référence aux dessins annexés sur lesquels :
- la figure 1 montre une vue en perspective en transparence du robinet de sécurité ;
- la figure 2 montre une vue en perspective du corps de robinet de sécurité ;
- la figure 3 montre une vue en perspective de l'organe d'obturation du robinet de sécurité ;
- la figure 4 montre une vue en perspective de l'actionneur d'armement du robinet de sécurité ;
- la figure 5 montre une vue en perspective du verrou.du robinet de sécurité ;
- la figure 6 montre une vue en perspective du organe de commande du verrou du robinet de sécurité ;
- la figure 7 montre une vue de profil du ressort de torsion du robinet de sécurité ;
- la figure 8 montre une coupe transversale du robinet de sécurité ;
- la figure 9 montre une coupe transversale selon la direction B-B' défini sur la figure 8 ; et
- la figure 10 montre un schéma de principe du moyen de commande du verrouillage.

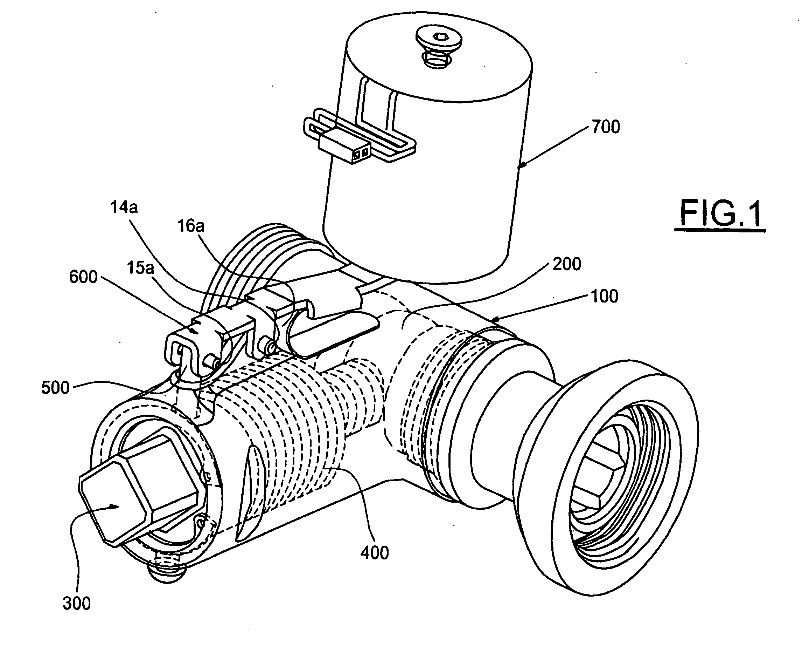

Le robinet de sécurité comprend un corps de robinet 100, un organe d'obturation 200, un ressort de torsion 400, un actionneur d'armement 300, un verrou 500, et un organe de commande 600 du verrou et un moyen de commande du verrouillage 700, illustrés sur la figure 1.

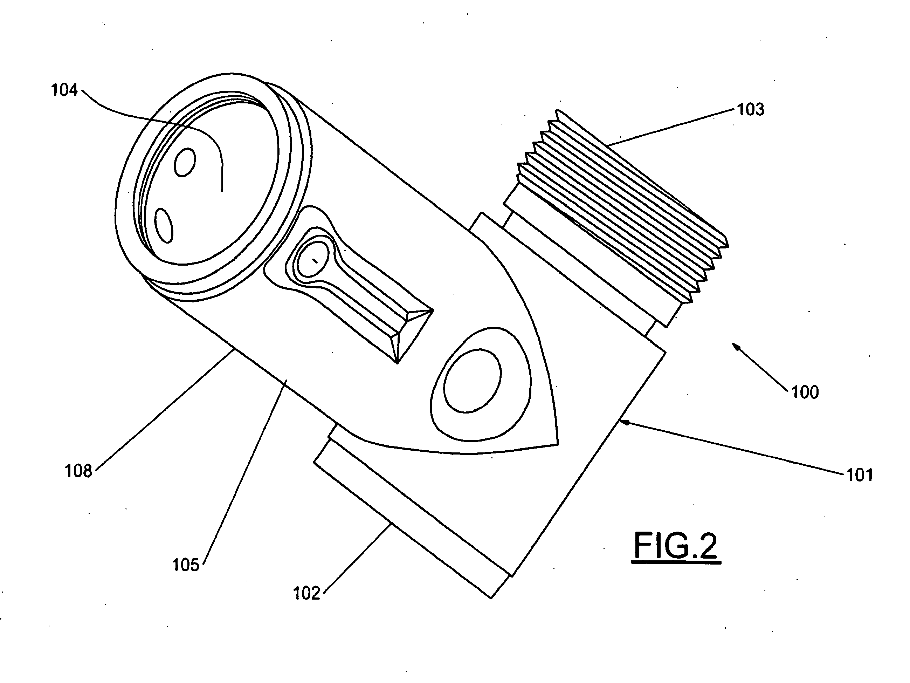

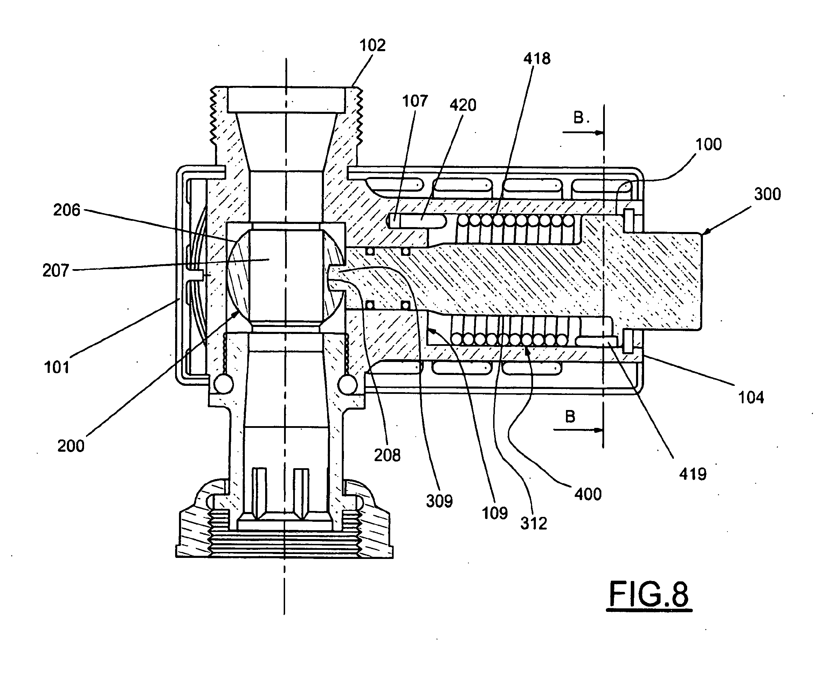

Comme illustré sur la figure 2, le corps de robinet 100 comprend une première ouverture 102 et une deuxième ouverture 103 reliées par un canal d'écoulement 101. Les ouvertures 102 et 103 peuvent être utilisées indistinctement comme entrée ou comme sortie du canal d'écoulement 101. Un logement 104 est relié perpendiculairement au canal d'écoulement 101 entre la première et la deuxième ouvertures. Sur la figure 8, on peut voir une coupe transversale du logement 104 permettant d'apprécier un épaulement 109. L'épaulement 109 assure la liaison entre la partie du logement 104 de grand diamètre destinée à accueillir le ressort de torsion 400 et l'organe d'armement 300 et la partie de petit diamètre destinée à accueillir uniquement l'organe d'armement 300. Une chape 105 est également présente en saillie du corps de robinet 100 afin de permettre l'accrochage de l'organe de commande 600 du verrou. Un trou radial 108 dans le corps de robinet permet le mouvement du verrou 500.

L'organe d'obturation 200 est situé à l'intersection entre le canal d'écoulement 101 et le logement 104 dans le corps de robinet 100.

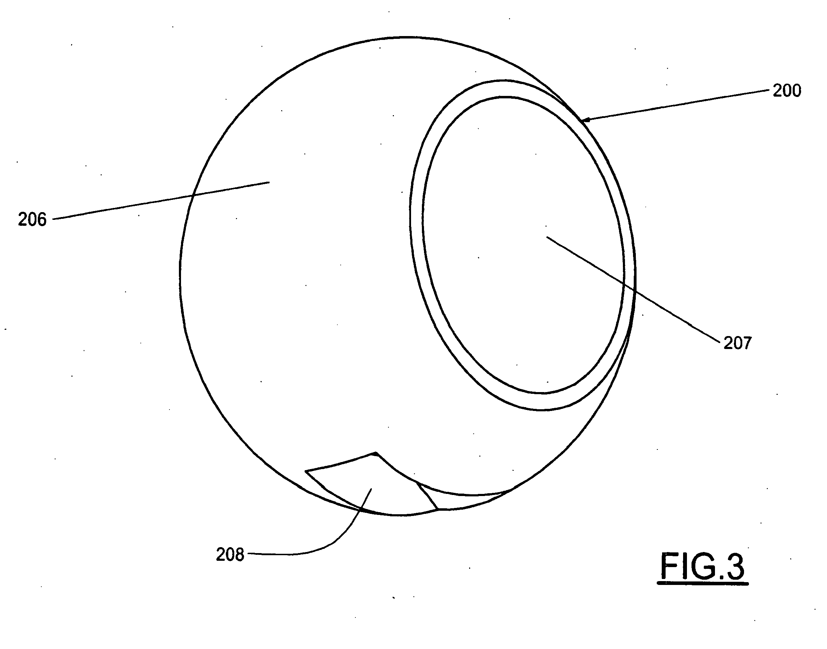

Comme illustré sur la figure 3, l'organe d'obturation 200 comprend une bille 206 dans laquelle est ménagé un trou d'écoulement 207 traversant la bille 206 selon un diamètre et présentant sur sa surface extérieure un système d'accroche 208 par complémentarité de forme. Le système d'accroche 208 par complémentarité de forme avec l'actionneur d'armement 300 est en position polaire par rapport au trou d'écoulement 207. Par système d'accroche 208 par complémentarité de forme, on entend par exemple un système complémentaire de type male/femelle à forme polygonale permettant la liaison en rotation par complémentarité de force avec le système d'accroche 309 correspondant de l'actionneur d'armement 300.

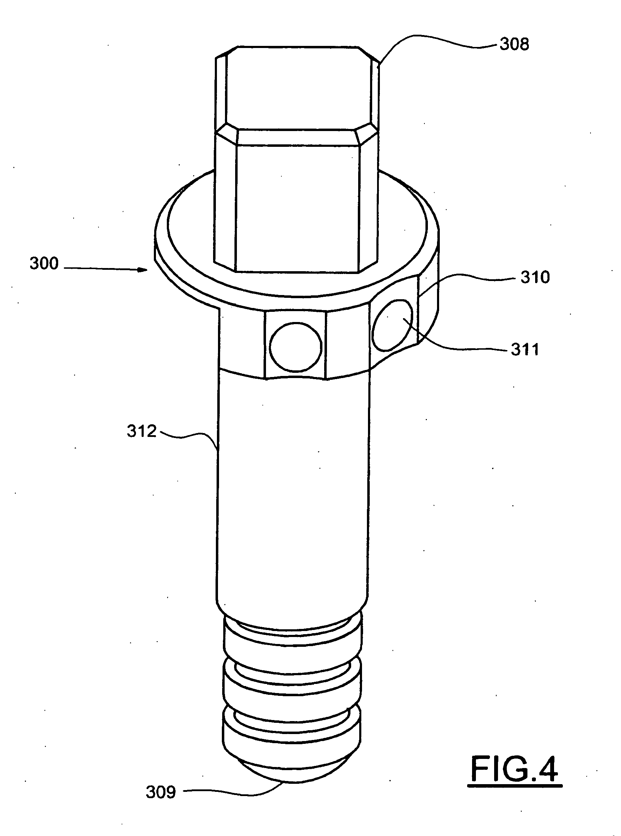

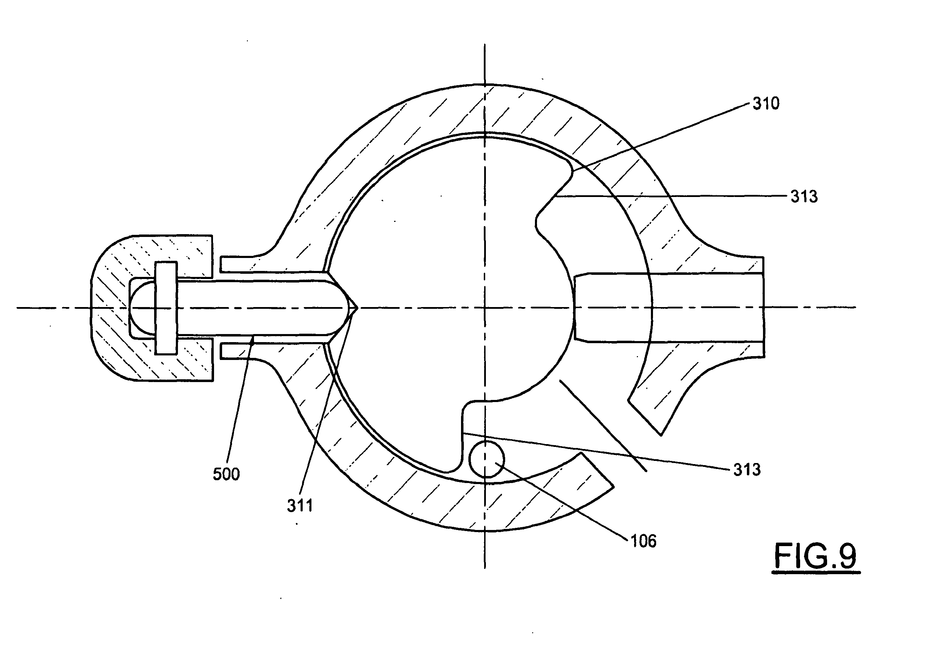

L'actionneur d'armement 300 est logé dans le logement 104 du corps de robinet 100 et est lié en rotation avec l'organe d'obturation 200 par le système d'accroche 309 complémentaire du système d'accroche 208 présent à la surface du organe d'obturation 200. L'actionneur d'armement 300 présente une forme générale allongée autour d'un axe géométrique et peut être issu d'une forme de révolution. Comme illustré sur la figure 4, l'actionneur d'armement 300 présente une tige 312 de forme allongée axialement, une collerette 310, et le système d'accroche 309 par complémentarité de forme, la tige 312 étant située entre le système d'accroche 309 et la collerette 310. Un polygone de manoeuvre 308 est situé au delà de la collerette 310. Dans la collerette 310 est ménagé un creux radial 311 servant de logement au verrou 500. Le creux radial 311 peut prendre, par exemple et de façon non limitative, la forme d'un secteur, d'une pyramide à base polygonale ou d'un cône, tronqués ou non. Quelle que soit la forme adoptée, elle s'inscrit dans un cône régulier, dont l'angle entre l'axe de révolution et la génératrice est supérieur ou égal à 22.5°, de préférence supérieur à 30°. L'axe de révolution est confondu avec un rayon géométrique de la tige 312. De plus, comme illustré sur la figure 9, deux surfaces radiales 313 ménagées dans la collerette 310 peuvent servir de butées de rotation à une première extrémité 419 d'un ressort de torsion 400 et de butées d'arrêt contre un doigt 106 de limitation de rotation moulé dans le corps de robinet 100 et en saillie entre les surfaces radiales 313. Les surfaces radiales 313 sont parallèles à l'axe de l'actionneur d'armement 300.

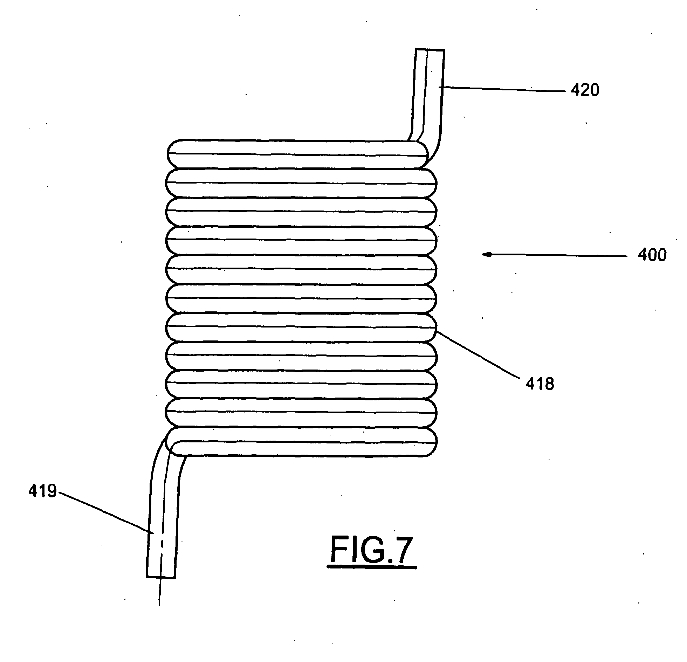

Le ressort de torsion 400 est disposé dans un logement 104 du corps de robinet 100, entre l'actionneur d'armement 300 et le corps de robinet 100. Comme illustré sur la figure 7, le ressort de torsion 400 comprend un enroulement comprenant plusieurs spires 418 dont le diamètre est inférieur au diamètre intérieur du logement 104 du corps de robinet 100 et supérieur au diamètre extérieur de l'axe de l'actionneur d'armement 300. Les extrémités 419,420 de l'enroulement sont parallèles à l'axe de l'enroulement afin de permettre son ancrage dans les éléments adjacents. Une première extrémité 419 du ressort de torsion 400 prend appui sur l'actionneur d'armement 300 entre les surfaces radiales 313 de la collerette 310 de l'actionneur d'armement 300 et une deuxième extrémité 420 prend appui dans un trou 107 axialement ménagé dans le corps de robinet 100 pour exercer une précontrainte tendant à faire tourner l'actionneur d'armement 300 afin de faire passer l'organe d'obturation 200 d'une position d'ouverture à une position de fermeture.

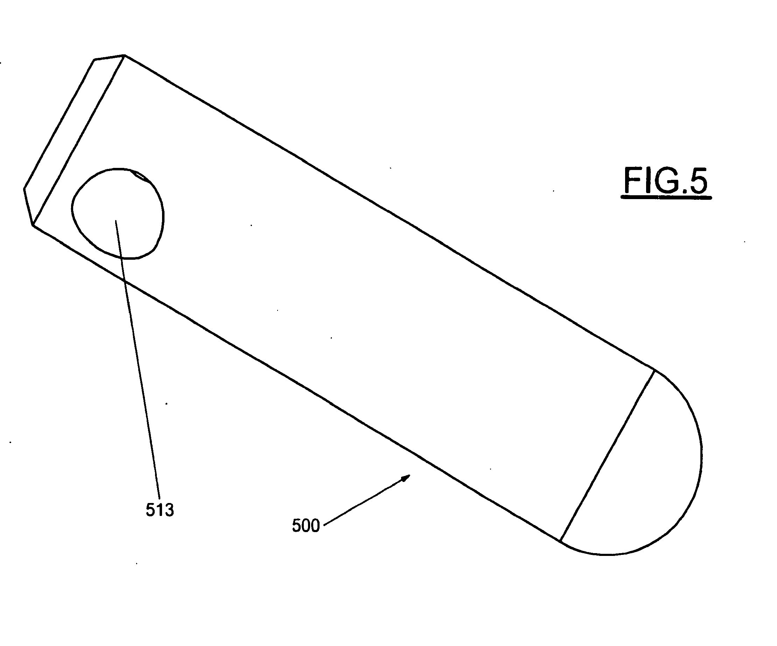

Le verrou 500 est disposé en partie dans un trou radial 108 du corps de robinet 100 et peut pénétrer dans le creux radial 311 formant gâche. Comme illustré sur la figure 5, le verrou 500 comprend un doigt métallique rigide comprenant un trou radial 513 à son extrémité libre afin d'être articulé avec la bride 615 de l'organe de commande 600 du verrou par l'intermédiaire d'un axe 15a. L'autre extrémité est arrondie et forme un pêne pour verrouiller l'actionneur d'armement 300 en position d'ouverture tout en permettant de forcer la rotation de l'actionneur d'armement 300 vers la position de fermeture.

Le verrou 500 est mobile radialement en translation entre deux positions et est guidé par le trou 108 du corps de robinet 100. Dans une position, le verrou 500 pénètre dans le creux radial 311 de la collerette 310 de l'actionneur d'armement 300. Dans une autre position, le verrou est retiré du creux radial 311 de la collerette 310 de l'actionneur d'armement 300.

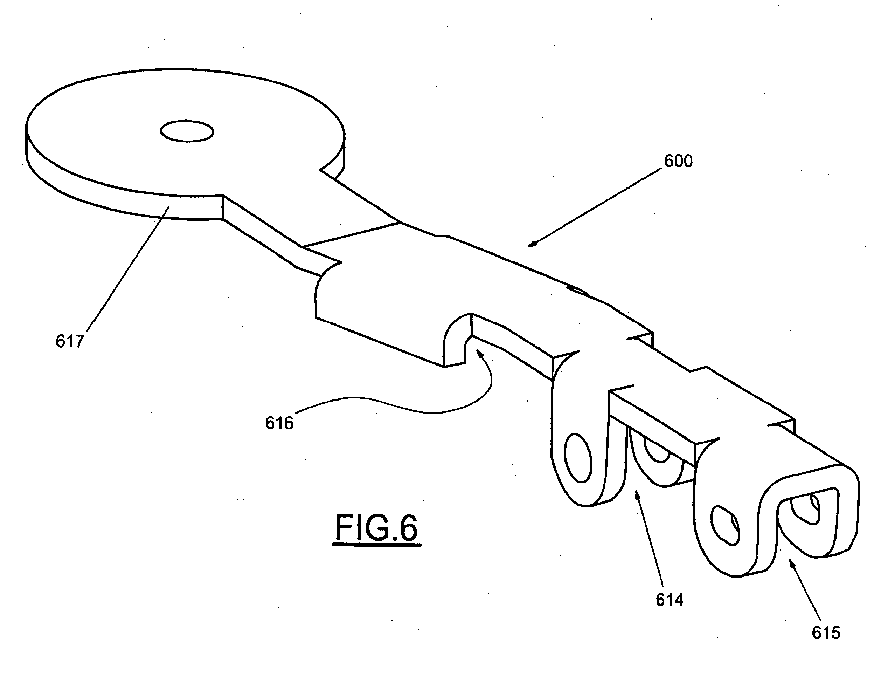

L'organe de commande 600 du verrou est de forme allongée et plate, comprenant plusieurs brides réalisées par pliage et présentant à une extrémité, un disque en matériau magnétique. Comme illustré sur la figure 6, l'organe de commande 600, pouvant être un levier de commande, comprend une première bride 614 de fixation articulée sur la chape 105 du corps de robinet 100, par un axe 14a, et une deuxième bride 615 articulée sur le verrou 500 par un axe 15a. L'organe de commande 600 du verrou coopère avec un ressort 16a disposé entre l'organe de commande 600 du verrou et le corps de robinet 100, par une surface d'appui 616 accueillant une extrémité du ressort 16a. Le ressort 16a tend à éloigner l'organe de commande 600 du corps de robinet 100 par effet de levier en conjonction avec l'articulation de la bride 614. Du même coté de l'organe de commande 600 que la surface d'appui 616 par rapport à la bride 614 se trouve un disque 617 en matériau magnétique capable d'interagir avec un champ magnétique, généré par le moyen de verrouillage 700, afin de maintenir l'organe de commande 600 du verrou en position de verrouillage.

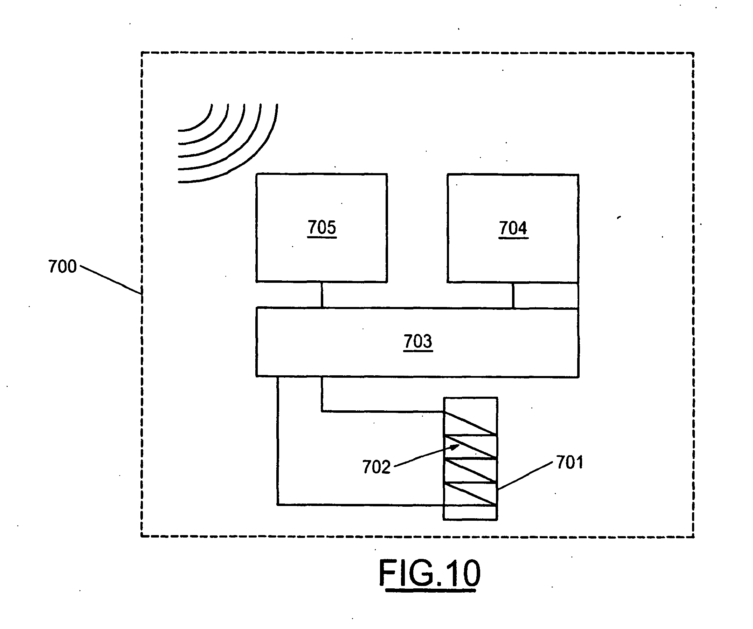

Le moyen de commande du verrouillage 700 comprend un aimant permanent 701, une bobine de neutralisation 702, un moyen de commande 703 de la bobine, un moyen d'alimentation 704 et un moyen de communication 705, comme illustré sur la figure 10. La bobine de neutralisation 702 est bobinée autour de l'aimant permanent 701 de façon à ce que le champ magnétique généré par la bobine de neutralisation 702 annule le champ de l'aimant permanent 701. Le moyen de commande 703 de la bobine est relié par au moins une de ses sorties à la bobine de neutralisation 702 et par ses entrées au moyen d'alimentation 704 et au moyen de communication 705.

La neutralisation du champ magnétique de l'aimant permanent 701 permet de débloquer l'organe de commande 600 du verrou.

Sur réception d'un signal de commande distant sous forme d'onde, le moyen de communication 705 émet un signal électrique vers le moyen de commande 703. Le moyen de commande 703 émet un courant dans la bobine de neutralisation 702 à partir de l'énergie stockée dans le moyen d'alimentation 704. La durée d'alimentation est mémorisée dans le moyen de commande 703 et est suffisante pour que le robinet de sécurité passe en position de fermeture.

En position de verrouillage, l'organe de commande 600 du verrou est positionné de façon que le verrou 500 pénètre dans le creux radial 311 de la collerette 310 de l'actionneur d'armement 300 afin de le maintenir en position d'ouverture. Lorsque l'organe de commande 600 du verrou passe en position de déverrouillage, le verrou 500 se rétracte du creux radial 311 de la collerette 310 de l'actionneur d'armement 300. Ainsi libéré, l'actionneur d'armement 300 est soumis à la force de rotation du ressort de torsion 400 qui lui imprime un mouvement de rotation tel que l'organe d'obturation 200 passe d'une position d'ouverture à une position de fermeture.

L'organe d'obturation 200 peut également être placé en position de fermeture en utilisant une commande manuelle 308, permettant d'appliquer une force suffisante pour déplacer le verrou 500 en position de déverrouillage, la force appliquée étant supérieure à la différence entre la force de verrouillage et la force de rotation du ressort de torsion 400. La pente du creux 311 est calculée pour offrir un verrouillage suffisant.

Dés que l'actionneur d'armement 300 est replacé en position d'ouverture, le verrou 500 reprend une position de verrouillage si l'organe de commande 600 du verrou est en position de verrouillage.

Le robinet de sécurité permet un contrôle électronique de la fermeture du robinet de sécurité. Ce contrôle peut être soit réalisé sur commande d'un détecteur, dans le cadre de détections de fuites, ou à distance par un opérateur, dans le cas de lignes de distribution.

Le robinet de sécurité permet également une commande manuelle par un opérateur, tant en ouverture qu'en fermeture.

## Revendications

1. Robinet de sécurité pour fluide circulant dans une canalisation, ledit robinet comprenant un orifice d'entrée (102), un orifice de sortie (103), un canal (101) reliant l'orifice d'entrée (102) et l'orifice de sortie (103), un organe d'obturation (200) disposé entre l'orifice d'entrée (102) et l'orifice de sortie (103), mobile entre une position d'ouverture du canal et une position de fermeture du canal, un actionneur d'armement (300) de l'organe d'obturation (200) capable de faire passer l'organe d'obturation (200) de la position d'ouverture à la position de fermeture, l'organe d'obturation (200) étant muni d'une partie de commande manuelle (308), **caractérisé par le fait qu'**il comprend un verrou (500) de maintien de l'organe d'obturation (200) en position d'ouverture, un organe de commande (600) du verrou maintenant le verrou en position de verrouillage sous l'action d'un aimant permanent et muni d'une bobine de neutralisation (700) générant un champ magnétique antagoniste à celui de l'aimant permanent pour déplacer le verrou (500) vers une position inactive provoquant le déplacement de l'organe d'obturation (200) vers la position de fermeture sous l'action de l'actionneur (300) le verrou (500) étant configuré pour autoriser un déplacement de l'organe d'obturation (200) soumis à un effort supérieur à la force de verrouillage du verrou, le verrou (500) étant capable de reprendre une position de verrouillage dés l'amenée de l'organe d'obturation (200) en position d'ouverture,

2. Robinet de sécurité selon la revendication 1 dans lequel l'actionneur d'armement (300) de l'organe d'obturation (200) est fixé à l'organe d'obturation (200) et à la partie de commande manuelle (308) de l'organe d'obturation (200), l'actionneur d'armement (300) comprenant une tige (312) liée en rotation par une de ses extrémités à l'organe d'obturation (200), et une collerette (310) dans laquelle est ménagé un trou radial (311) formant un logement pour le verrou (500) de maintient.

3. Robinet de sécurité selon la revendication 2 dans lequel l'organe de commande (600) du verrou comprend une première bride (614), une deuxième bride d'articulation (615) avec le verrou, une surface d'appui (616) avec un ressort (16a) exerçant une force sur l'organe de commande (600) du verrou et une partie magnétique (617) capable d'interagir avec un aimant permanent située également d'un deuxième coté de la bride (614) à une distance plus grande de la bride (614) que la surface d'appui (616) du ressort afin de former un levier, l'organe de commande (600) du verrou possédant deux positions de fonctionnement distinctes, une position de déverrouillage telle que le verrou (500) est sorti du logement (311) de la collerette (310) de l'actionneur d'armement (300) et une position de verrouillage telle que le verrou (500) est positionné dans le logement (311) de la collerette (310) de l'actionneur d'armement (300).

4. Robinet de sécurité selon l'une des revendications précédentes comprenant un moyen de communication pouvant recevoir un signal distant et émettre par au moins une des ses sorties un signal à destination d'un moyen de commande.

5. Robinet de sécurité selon la revendication 4, comprenant un moyen de commande recevant sur au moins un de ses entrées un signal provenant du moyen de communication et capable de commander l'énergie envoyée dans la bobine de neutralisation (700), afin de placer le verrou (500) en position de verrouillage ou de déverrouillage.

6. Robinet de sécurité selon l'une des revendications précédentes comprenant un moyen d'alimentation autonome en énergie capable d'alimenter en énergie le robinet de sécurité.

## Claims

1. Safety valve for fluid circulating in pipes, the said valve comprising an inlet opening (102), an outlet opening (103), a channel (101) connecting the inlet opening (102) and the outlet opening (103), a sealing member (200) arranged between the inlet opening (102) and the outlet opening (103), movable between a position for opening the channel and a position for closing the channel, a setting actuator (300) for the sealing member (200) capable of switching the sealing member (200) from the open position to the closed position, the sealing member (200) being provided with a manual control portion (308), **characterised in that** it comprises a bolt (500) for holding the sealing member (200) in the open position, a control member (600) for the bolt which holds the bolt in the locking position under the effect of a permanent magnet and is equipped with a neutralising coil (700) generating a magnetic field opposed to that of the permanent magnet so as to move the bolt (500) into an inactive position, causing the sealing member (200) to move into the closed position under the effect of the actuator (300), the bolt (500) being configured so as to allow movement of the sealing member (200) subjected to a force greater than the locking force of the bolt, the bolt (500) being capable of resuming a locking position as soon as the locking member (200) is brought into the open position.

2. Safety valve according to claim 1, wherein the setting actuator (300) of the sealing member (200) is fixed to the sealing member (200) and to the manual control portion (308) of the sealing member (200), the setting actuator (300) comprising a rod (312) connected for rotation, at one of its ends, to the sealing member (200), and a collar (310) in which a radial hole (311) is provided, forming a housing for the holding bolt (500).

3. Safety valve according to claim 2, wherein the control member (600) of the bolt comprises a first flange (614), a second flange (615) jointed to the bolt, a bearing surface (616) with a spring (16a) exerting a force on the control member (600) of the bolt and a magnetic portion (617) capable of interacting with a permanent magnet which is also located on a second side of the flange (614) at a greater distance from the flange (614) than the bearing surface (616) of the spring, so as to form a lever, the control member (600) of the bolt having two distinct operating positions, an unlocking position in which the bolt (500) is withdrawn from the housing (311) in the collar (310) of the setting actuator (300) and a locking position in which the bolt (500) is positioned in the housing (311) in the collar (310) of the setting actuator (300).

4. Safety valve according to one of the preceding claims, comprising communication means capable of receiving a remote signal and of emitting, from at least one of its outputs, a signal intended for a control means.

5. Safety valve according to claim 4, comprising a control means receiving at at least one of its inputs a signal from the communication means and capable of controlling the energy passed into the neutralising coil (700) so as to place the bolt (500) in the locking or unlocking position.

6. Safety valve according to one of the preceding claims, comprising autonomous energy supply means capable of supplying the safety valve with energy.

## Patentansprüche

1. Sicherheitsventil für Flüssigkeiten, die in einem Kanalsystem zirkulieren, wobei das Ventil eine Eintrittsöffnung (102), eine Austrittsöffnung (103), einen Kanal (101), der die Eintrittsöffnung (102) mit der Austrittsöffnung (103) verbindet, ein Verschließorgan (200), das zwischen der Eintrittsöffnung (102) und der Austrittsöffnung (103) angeordnet ist, wobei es zwischen einer Öffnungsstellung des Kanals und einer Schließstellung des Kanals beweglich ist, ein Betätigungsorgan (300) des Schließorgans (200) aufweist, das in der Lage ist, das Schließorgan (200) von der Öffnungsstellung in die Schließstellung zu bringen, wobei das Schließorgan (200) mit einem Handbetätigungsabschnitt (308) versehen ist, **gekennzeichnet durch** die Tatsache, dass es einen Riegel (500) zum Halten des Schließorgans (200) in Öffnungsstellung, ein Steuerungsorgan (600) des Riegels aufweist, das den Riegel in Verriegelungsstellung unter Einwirkung eines Permanentmagneten hält und mit einer Neutralisationsspule (700) versehen ist, die ein magnetisches Feld erzeugt, das jenem des Permanentmagneten entgegenwirkend ist, um den Riegel (500) in eine inaktive Position zu bewegen, wodurch die Bewegung des Schließorgans (200) in die Schließposition unter Einwirkung des Betätigungsorgans (300) hervorgerufen wird, wobei der Riegel (500) derart ausgebildet ist, dass er eine Bewegung des Schließorgans (200) erlaubt, das einer Kraft unterworfen ist, die größer ist als die Verriegelungskraft des Riegels, wobei der Riegel (500) in der Lage ist, wieder eine Verriegelungsposition einzunehmen, sobald das Schließorgan (200) in Öffnungsstellung gebracht ist.

2. Sicherheitsventil nach Anspruch 1, bei dem das Betätigungsorgan (300) des Schließorgans (200) am Schließorgan (200),und am Handbetätigungsabschnitt (308) des Schließorgans (200) befestigt ist, wobei das Betätigungsorgan (300) eine Stange (312), die durch eines ihrer Enden mit dem Schließorgan (200) drehverbunden ist, und einen Kragen (310) aufweist, in dem eine Radialöffnung (311) ausgebildet ist, die eine Aufnahme für den Halteriegel (500) bildet.

3. Sicherheitsventil nach Anspruch 2, bei dem das Steuerungsorgan (600) des Riegels einen ersten Flansch (614) und einen zweiten Gelenkflansch (615) mit dem Riegel, eine Andruckfläche (616) mit einer Feder (16a), die eine Kraft auf das Steuerungsorgan (600) des Riegels ausübt und einen magnetischen Abschnitt (617) aufweist, der in der Lage ist, mit einem Permanentmagneten zu interagieren, der ebenfalls auf einer zweiten Seite des Flansches (614) angeordnet ist, mit einem größeren Abstand vom Flansch (614) als die Andruckfläche (616) der Feder, um einen Hebel zu bilden, wobei das Steuerungsorgan (600) des Riegels zwei verschiedene Betriebsstellungen aufweist, eine Entriegelungsstellung derart, dass der Riegel (500) aus der Aufnahme (300) des Kragens (310) des Betätigungsorgans (300) ausgetreten ist, und einer Verriegelungsstellung derart, dass der Riegel (500) in der Aufnahme (311) des Kragens (310) des Betätigungsorgans (300) angeordnet ist.

4. Sicherheitsventil nach einem der vorhergehenden Ansprüche, mit einer Kommunikationseinrichtung, die ein Fernbedienungssignal aufnehmen kann und mittels wenigstens einem seiner Ausgänge ein Signal nach einer Steuerungseinrichtung ausgeben kann.

5. Sicherheitsventil nach Anspruch 4, mit einer Steuerungseinrichtung, die auf wenigstens einem ihrer Eingänge ein Signal von der Kommunikationseinrichtung aufnimmt, und in der Lage ist, die in die Neutralisationsspule (700) zugeführte Energie zu steuern, um den Riegel (500) in Verriegelungs- oder Entriegelungsstellung zu setzen.

6. Sicherheitsventil nach einem der vorhergehenden Ansprüche, mit einer energieautonomen Stromversorgungseinrichtung, die in der Lage ist, das Sicherheitsventil mit Energie zu versorgen.
